# EUROPÄISCHE PATENTSCHRIFT

(11) **EP 2 838 220 B1**
(45) Veröffentlichungstag und Bekanntmachung des Hinweises auf die Patenterteilung: **29.09.2021**
(21) Anmeldenummer: 13180335.5
(22) Anmeldetag: 14.08.2013
(51) Int. Cl.: H04L 1/08, H04L 1/22, H04L 1/00

(54) **Verfahren zur redundanten Nachrichtenübermittlung in einem industriellen Kommunikationsnetz und Kommunikationsgerät**
Method for the redundant transmission of messages in an industrial communication network and communication device
Procédé de transmission redondante de messages dans un réseau de communication industriel et appareil de communication

(43) Veröffentlichungstag der Anmeldung: 18.02.2015
(73) Patentinhaber: Siemens Aktiengesellschaft, 80333 München (DE)
(72) Erfinder: Angst, Hermann, 76199 Karlsruhe (DE); Götz, Franz-Josef, 91180 Heideck (DE); Klotz, Dieter, 90768 Fürth (DE); Lohmeyer, Joachim, 91161 Hilpoltstein (DE); Scheffel, Matthias, 82008 Unterhaching (DE)

(56) Entgegenhaltungen:
- IEC ED - IEC: "Part 3: Parallel Redundancy Protocol (PRP) andHigh-availability Seamless Redundancy (HSR)", INTERNET CITATION, 31. Dezember 2010 (2010-12-31), Seiten 1-62, XP002680227, Gefunden im Internet: URL:http://lamspeople.epfl.ch/kirrmann/Pub s/IEC_61439-3/WG15-12-04d_62439-3_AMD_HK_1 01109.pdf [gefunden am 2012-07-18]
- SAAD ALLAWI NSAIF ET AL: "Improvement of high-availability seamless redundancy (HSR) traffic performance for smart grid communications", JOURNAL OF COMMUNICATIONS AND NETWORKS, KOREAN INSTITUTE OF COMMUNICATION SCIENCES, SEOUL, KR, Bd. 14, Nr. 6, 1. Dezember 2012 (2012-12-01), Seiten 653-661, XP011487639, ISSN: 1229-2370, DOI: 10.1109/JCN.2012.00031
- HUYNH M ET AL: "Resilience technologies in Ethernet", COMPUTER NETWORKS, ELSEVIER SCIENCE PUBLISHERS B.V., AMSTERDAM, NL, Bd. 54, Nr. 1, 15. Januar 2010 (2010-01-15), Seiten 57-78, XP026835579, ISSN: 1389-1286 [gefunden am 2009-08-22]
- None

## Beschreibung

Üblicherweise umfaßt ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozeßautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare in industriellen Kommunikationsnetze entwickelt worden.

Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

High-availability Seamless Redundancy (HSR) und Parallel Redundancy Protocol (PRP) sind im Standard IEC 62439-3 definiert und ermöglichen eine stoßfreie redundante Übertragung von Nachrichten, insbesondere ohne Umschaltstöße bei Topologieänderungen. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine solche Netzkomponente, die Telegramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR-oder PRP-Kommunikationsnetz mehrere HSR-Ringe verbinden oder Kommunikation zwischen HSR- und PRP-Netzsegmenten umsetzen. In diesem Fall wird die Netzkomponente als HSR-HSR-Koppler oder QuadBox bzw. HSR-PRP-Koppler bezeichnet.

Aus EP 2 165 474 A2 ist ein Verfahren zum Betreiben eines Netzes bekannt, das einen Switch sowie daran angeschlossene Netzinfrastrukturgeräte aufweist. Der Switch wird von einer Steuereinheit gesteuert. Eine zwischen den Switch und die Steuereinheit geschaltete Redundanzeinheit analysiert einen Datenstrom zwischen Switch und Steuereinheit und fügt in Abhängigkeit von einem Analyseergebnis Daten in den Datenstrom ein bzw. entfernt Daten aus dem Datenstrom.

In EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder einen leeren Datenrahmen an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

Aus EP 2 413 538 A1 ist ein Verfahren zur redundanten Kommunikation in einem Kommunikationssystem bekannt, das mehrere Kommunikationsnetze umfaßt. Die Kommunikationsnetze sind über zumindest einen Kopplungsknoten miteinander verbunden. Eine Rückübertragung von Daten, die aus einem ersten Kommunikationsnetz stammen, aus einem zweiten Kommunikationsnetz zurück in das erste Kommunikationsnetz wird auf Grund einer vor Datenübertragung definierten Information verhindert.

Aus IEC, "Part 3: Parallel Redundancy Protocol (PRP) and High-availability Seamless Redundancy (HSR)," International Standard 62439-3:2010, Seiten 1-62, publiziert am 31. Dezember 2010 (2010-12-31) ist ein weiteres Verfahren zur redundanten Kommunikation in HSR Netzwerken bekannt.

Verfahren stoßfreie redundante Übertragung von Nachrichten entsprechend High-availability Seamless Redundancy oder Parallel Redundancy Protocol sind in ihrer Anwendung auf Netztopologien mit Ringstrukturen oder mit mehreren getrennt voneinander aufgebauten redundanten Kommunikationsnetzen beschränkt.

Der vorliegenden Erfindung liegt die Aufgabe zugrunde, ein im wesentlichen topologieunabhängiges Verfahren zur redundanten, stoßfreien Nachrichtenübermittlung in einem vermaschten industriellen Kommunikationsnetz zu schaffen und ein zur Durchführung des Verfahrens geeignetes Kommunikationsgerät anzugeben.

Diese Aufgabe wird erfindungsgemäß durch ein Verfahren mit den in Anspruch 1 angegebenen Merkmalen sowie durch ein Kommunikationsgerät mit den in Anspruch 9 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur redundanten Nachrichtenübermittlung in einem industriellen Kommunikationsnetz umfaßt zumindest ein Kommunikationsgerät zumindest eine erste und eine zweite Sende- und Empfangseinheit, die jeweils eine Schnittstelle für eine Netzverbindung des industriellen Kommunikationsnetzes aufweisen und mit einem Koppelelement des Kommunikationsgeräts verbunden sind. Dieses Kommunikationsgerät ist ein Switch oder eine Bridge. Das Koppelelement ist vorzugsweise ein Hochgeschwindigkeitsbus. Alternativ hierzu kann das Koppelelement grundsätzlich auch mittels eines Matrix-Schaltnetzes realisiert sein. Den Sende- und Empfangseinheiten ist eine Signalverarbeitungseinheit des Kommunikationsgeräts zugeordnet, durch die redundant vom Kommunikationsgerät zu sendende Nachrichten dupliziert von den Sende- und Empfangseinheiten gesendet und von den Sende- und Empfangseinheiten am Kommunikationsgerät redundant empfangene Nachrichten detektiert werden. Je nach Protokollebene kann eine Nachricht beispielsweise durch ein Datensegment, ein Datenpaket oder einen Datenrahmen repräsentiert werden. Zueinander redundante Nachrichten werden erfindungsgemäß durch einen gemeinsamen Duplikateidentifikator gekennzeichnet.

Darüber hinaus weist das industrielle Kommunikationsnetz entsprechend dem erfindungsgemäßen Verfahren eine beliebig vermaschte Netztopologie auf. Ein Kommunikationsnetz mit einer vermaschten Netztopologie umfaßt beispielsweise jeweils mehrere über getrennte Koppeleinheiten, wie Switches oder Bridges, und Koppelstrecken, wie drahtgebundene oder drahtungebundene Kommunikationsverbindungen, geführte Pfade zwischen zwei Netzknoten. Für eine zumindest abschnittsweise redundante Kommunikationsverbindung zwischen zwei Netzknoten innerhalb des industriellen Kommunikationsnetzes werden voneinander unabhängige Pfade ermittelt, die separate Netzknoten umfassen. Nachrichten mit Duplikateidentifikatoren werden entsprechend zu den ermittelten Pfaden korrespondierenden Weiterleitungsregeln zwischen den Sende- und Empfangseinheiten des Kommunikationsgeräts ausgetauscht. Auf diese Weise kann eine stoßfreie Medienredundanz in einem einzelnen Kommunikationsnetz mit einer beliebig vermaschten Netztopologie realisiert werden.

Grundsätzlich ist es möglich, daß nur Teilbereiche eines Kommunikationsnetzes eine vermaschte Netztopologie aufweisen. Damit stehen nur teilweise redundante Pfade zur Verfügung. Dementsprechend ist ein Kommunikationsnetz mit einer nur in Teilbereichen vermaschten Netztopologie nur in diesen Teilbereichen gegen Ausfälle abgesichert.

Entsprechend einer Augestaltung des erfindungsgemäßen Verfahrens ist über das Koppelelement ein einfach angebundener Netzknoten mit den Sende- und Empfangseinheiten verbunden. Die Duplikateidentifikatoren werden durch den einfach angebundenen Netzknoten in redundant zu sendende Nachrichten eingefügt. In entsprechender Weise werden Duplikateidentifikatoren durch den einfach angebundenen Netzknoten aus redundant empfangenen Nachrichten entfernt. Alternativ zu dieser Ausgestaltung können die Duplikateidentifikatoren durch die Signalverarbeitungseinheit in redundant zu sendende Nachrichten des einfach angebundenen Netzknotens eingefügt und aus redundant empfangenen Nachrichten für den einfach angebundenen Netzknoten entfernt werden.

In einer Kommunikationsbeziehung auf einem ermittelten Pfad ausgetauschte Nachrichten können eindeutig anhand von Quellund Zieladresse, einer festgelegten Priorität oder einer Kennung eines virtuellen lokalen Netzes bzw. anhand einer Kombination dieser Angaben eindeutig identifiziert werden. Quell- und Zieladressen können sowohl IP-Adressen als auch MAC-Adressen sein. Unter virtuelle lokale Netze sind beispielsweise als VLAN bezeichnete logische Gruppierungen von Kommunikationsteilnehmern bzw. Anschlüssen zu subsumieren. Entsprechend einer vorteilhaften Ausgestaltung des erfindungsgemäßen Verfahrens wird für die ermittelten voneinander unabhängigen Pfade jeweils ein virtuelles lokales Netz eingerichtet. Die ermittelten voneinander unabhängigen Pfade werden dabei anhand einer Kennung ihres zugeordneten virtuellen lokalen Netzes identifiziert. Eine Einrichtung eines virtuellen lokalen Netzes kann portbasiert oder dynamisch erfolgen.

Die Signalverarbeitungseinheit des Kommunikationsgeräts ist vorzugsweise mittels eines Field Programmable Gate Arrays (FPGA) realisiert, während das Koppelelement beispielsweise ein Backplane Switch mit zugeordnetem Controller ist. Somit kann ein FPGA quasi als Coprozessor für einen Backplane Switch Controller Netzkopplungsaufgaben übernehmen. Da Backplane Switch Controller üblicherweise eine VLAN-Funktionalität aufweisen, kann eine Anbindung eines FPGA als Coprozessor für einen Backplane Switch vereinfacht werden. Das FPGA kann nämlich anhand jeweiliger VLAN-Kennungen in Datenrahmen Nachrichten nach den ermittelten voneinander unabhängigen Pfaden differenziert behandeln. Zusätzlich kann ein FPGA zur Speicherung einer Tabelle (proxy node table) mit Angaben zu sämtlichen mit dem Koppelelement verbundenen einfach angebundenen Netzknoten genutzt werden. Dies ermöglicht eine einfache Verwaltung von mit dem Kommunikationsgerät verbundenen einfach angebundenen Netzknoten.

Die voneinander unabhängigen Pfade können beispielsweise durch eine zentrale Instanz innerhalb des industriellen Kommunikationsnetzes oder dezentral durch die Netzknoten des industriellen Kommunikationsnetzes ermittelt werden. Insbesondere können die voneinander unabhängigen Pfade durch die Signalverarbeitungseinheit des Kommunikationsgeräts ermittelt werden.

Vorzugsweise werden in einer der Signalverarbeitungseinheit zugeordneten Speichereinheit Duplikateidentifikatoren von bereits fehlerfrei empfangenen Nachrichten gespeichert. Dementsprechend überprüft die Signalverarbeitungseinheit bei Empfang einer neuen Nachricht deren Duplikateidentifikator auf Übereinstimmung mit einem bereits gespeicherten Duplikateidentifikator.

Das erfindungsgemäße Kommunikationsgerät für ein redundant betreibbares industrielles Kommunikationsnetz ist zur Durchführung des vorangehend beschriebenen Verfahrens geeignet und umfaßt zumindest eine erste und eine zweite Sende- und Empfangseinheit, die jeweils eine Schnittstelle für eine Netzverbindung des industriellen Kommunikationsnetzes aufweisen. Zusätzlich ist ein mit den Sende- und Empfangseinheiten verbundenes Koppelelement vorgesehen. Den Sende- und Empfangseinheiten ist eine Signalverarbeitungseinheit zugeordnet, die eine Replikationseinheit zum Duplizieren von durch die Sendeund Empfangseinheiten redundant zu sendenden Nachrichten und eine Filtereinheit umfaßt, die für eine Detektion redundant empfangener Nachrichten eingerichtet ist. Dabei sind zueinander redundante Nachrichten durch einen gemeinsamen Duplikateidentifikator gekennzeichnet.

Darüber hinaus ist das erfindungsgemäße Kommunikationsgerät für einen Betrieb in einem industriellen Kommunikationsnetz mit einer vermaschten Netztopologie ausgestaltet und eingerichtet. Für eine zumindest abschnittsweise redundante Kommunikationsverbindung zwischen zwei Netzknoten innerhalb des industriellen Kommunikationsnetzes sind dabei voneinander unabhängige Pfade ermittelt, die separate Netzknoten umfassen. Außerdem umfaßt die Signalverarbeitungseinheit eine Weiterleitungseinheit, die dafür ausgestaltet und eingerichtet ist, daß Nachrichten mit Duplikateidentifikatoren entsprechend zu den ermittelten Pfaden korrespondierenden Weiterleitungsregeln zwischen den Sende- und Empfangseinheiten des Kommunikationsgeräts ausgetauscht werden.

Über das Koppelelement kann beispielsweise ein einfach angebundener Netzknoten mit den Sende- und Empfangseinheiten verbunden sein. Die Signalverarbeitungseinheit kann eine Funktionseinheit umfassen, die dafür ausgestaltet und eingerichtet ist, daß Duplikateidentifikatoren durch die Signalverarbeitungseinheit in redundant zu sendende Nachrichten des einfach angebundenen Netzknotens eingefügt werden. Außerdem kann die Signalverarbeitungseinheit eine Funktionseinheit umfassen, die dafür ausgestaltet und eingerichtet ist, daß Duplikateidentifikatoren durch die durch die Signalverarbeitungseinheit aus redundant empfangenen Nachrichten für den einfach angebundenen Netzknoten entfernt werden. Auf diese Weise können einfach angebundene Netzknoten ohne Redundanzfunktionen in stoßfreie Medienredundanzverfahren für Kommunikationsnetze mit beliebiger vermaschter Netztopologie einbezogen werden.

Vorzugsweise ist für die ermittelten voneinander unabhängigen Pfade jeweils ein virtuelles lokales Netz eingerichtet. Dabei sind die ermittelten voneinander unabhängigen Pfade anhand einer Kennung ihres zugeordneten virtuellen lokalen Netzes identifizierbar. Entsprechend einer vorteilhaften Weiterbildung des erfindungsgemäßen Kommunikationsgeräts umfaßt das Koppelelement eine Steuerungseinheit, die für einen Betrieb von virtuellen lokalen Netzen eingerichtet ist. Entsprechend einer weiteren Ausgestaltung ist die Signalverarbeitungseinheit dafür ausgestaltet und eingerichtet, die voneinander unabhängigen Pfade zu ermitteln, beispielsweise als zentrale Instanz innerhalb des industriellen Kommunikationsnetzes.

Die Sende- und Empfangseinheiten können direkt oder über die Signalverarbeitungseinheit mit dem Koppelelement verbunden sein. Die Signalverarbeitungseinheit kann wiederum direkt oder über das Koppelelement mit den Sende- und Empfangseinheiten verbunden sein.

Entsprechend einer besonders bevorzugten Ausgestaltung des erfindungsgemäßen Kommunikationsgeräts umfaßt die Signalverarbeitungseinheit eine Speichereinheit zur Speicherung von Duplikateidentifikatoren von bereits fehlerfrei empfangenen Nachrichten. Darüber hinaus ist die Filtereinheit dafür ausgestaltet und eingerichtet ist, bei Empfang einer neuen Nachricht deren Duplikateidentifikator auf Übereinstimmung mit einem bereits gespeicherten Duplikateidentifikator zu überprüfen.

Die vorliegende Erfindung wird nachfolgend an einem Ausführungsbeispiel anhand der Zeichnung näher erläutert. Es zeigt
- Figur 1: eine schematische Darstellung eines Kommunikationsgeräts für ein redundant betreibbares industrielles Kommunikationsnetz,
- Figur 2: eine schematische Darstellung vermaschten redundant betreibbaren industriellen Kommunikationsnetzes.

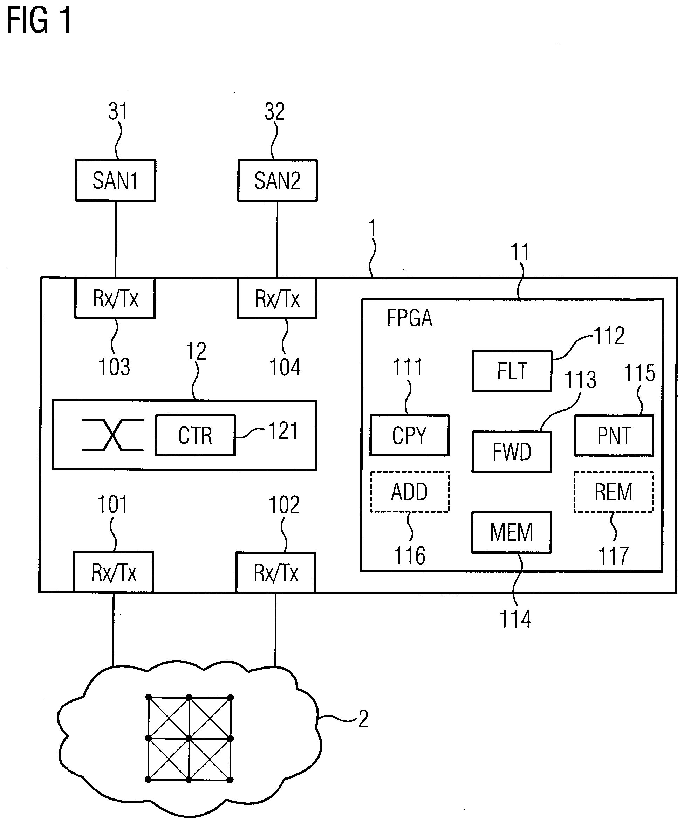

Das in Figur 1 dargestellte Kommunikationsgerät 1 für ein redundant betreibbares industrielles Kommunikationsnetz 2 umfaßt mehrere Sende- und Empfangseinheiten 101-104, die jeweils eine Schnittstelle für eine Netzverbindung des industriellen Kommunikationsnetzes 2 aufweisen. Dabei sind eine erste und eine zweite Sende- und Empfangseinheit 101-102 direkt an das industrielle Kommunikationsnetz 2 angeschlossen. Mit den Sende- und Empfangseinheiten 101-104 ist ein Koppelelement 12 verbunden. Über das Koppelelement 12 sind im vorliegenden Ausführungsbeispiel zwei einfach angebundener Netzknoten 31-32 mit der ersten 101 und der zweiten Sende- und Empfangseinheit 102 verbunden. Darüber hinaus umfaßt das Koppelelement 12 eine Steuerungseinheit 121, die für einen Betrieb von virtuellen lokalen Netzen eingerichtet ist. Vorzugsweise ist das Koppelelement 12 durch einen Backplane Switch mit integriertem Controller realisiert.

Den Sende- und Empfangseinheiten 101-104 ist eine mittels eines Field Programmable Gate Arrays (FPGA) realisierte Signalverarbeitungseinheit 11 zugeordnet, die eine Replikationseinheit 111 zum Duplizieren von durch die erste 101 und die zweite Sende- und Empfangseinheit 102 redundant zu sendenden Nachrichten umfaßt. Außerdem weist die Signalverarbeitungseinheit 11 eine Filtereinheit 112, die für eine Detektion von durch die erste 101 und die zweite Sende- und Empfangseinheit 102 redundant empfangener Nachrichten eingerichtet ist. Zueinander redundante Nachrichten sind dabei durch einen gemeinsamen Duplikateidentifikator gekennzeichnet.

Das Kommunikationsgerät ist für einen Betrieb in einem industriellen Kommunikationsnetz 2 mit einer vermaschten Netztopologie ausgestaltet und eingerichtet ist. Für eine zumindest abschnittsweise redundante Kommunikationsverbindung zwischen zwei Netzknoten innerhalb des industriellen Kommunikationsnetzes sind voneinander unabhängige Pfade ermittelt, die separate Netzknoten eines einzelnen Kommunikationsnetzes umfassen. Die Signalverarbeitungseinheit umfaßt des weiteren eine Weiterleitungseinheit 113, die dafür ausgestaltet und eingerichtet ist, daß Nachrichten mit Duplikateidentifikatoren entsprechend zu den ermittelten Pfaden korrespondierenden Weiterleitungsregeln zwischen den Sende- und Empfangseinheiten 101-102 des Kommunikationsgeräts 1 ausgetauscht werden, die direkt mit dem vermaschten Kommunikationsnetz 2 verbunden sind. Grundsätzlich kann die Weiterleitungseinheit 113 entsprechend einer möglichen Ausführungsvariante auch redundante voneinander unabhängige Pfade ermitteln oder Weiterleitungsregeln für Kommunikationsgeräte an weiteren Netzknoten innerhalb des industriellen Kommunikationsnetzes 2 bereitstellen.

Darüber hinaus umfaßt die Signalverarbeitungseinheit 11 eine Speichereinheit 114 zur Speicherung von Duplikateidentifikatoren von bereits fehlerfrei empfangenen Nachrichten. Dabei ist die Filtereinheit 112 dafür ausgestaltet und eingerichtet, bei Empfang einer neuen Nachricht deren Duplikateidentifikator auf Übereinstimmung mit einem bereits gespeicherten Duplikateidentifikator zu überprüfen. Zusätzlich umfaßt die Signalverarbeitungseinheit 11 eine Speichereinheit 115 zur Speicherung einer Tabelle (proxy node table) mit Angaben zu sämtlichen mit dem Koppelelement 12 verbundenen einfach angebundenen Netzknoten 31-32.

Speziell für einfach angebundene Netzknoten 31-32 ohne jegliche Redundanzfunktionen umfaßt die Signalverarbeitungseinheit 11 als optionale Komponente eine Funktionseinheit 116, die dafür ausgestaltet und eingerichtet ist, daß Duplikateidentifikatoren durch die Signalverarbeitungseinheit 11 in redundant zu sendende Nachrichten eines einfach angebundenen Netzknotens 31-32 eingefügt werden. Zusätzlich weist die Signalverarbeitungseinheit 11 als optionale Komponente eine Funktionseinheit 117 auf, die dafür ausgestaltet und eingerichtet ist, daß Duplikateidentifikatoren durch die durch die Signalverarbeitungseinheit 11 aus redundant empfangenen Nachrichten für einen einfach angebundenen Netzknoten 31-32 entfernt werden.

Das Kommunikationsgerät entsprechend Figur 1 ist zur Durchführung eines Verfahrens zur redundanten Nachrichtenübermittlung in einem industriellen Kommunikationsnetz 2 geeignet, bei dem das industrielle Kommunikationsnetz eine vermaschte Netztopologie 2 aufweist, und bei dem für eine zumindest abschnittsweise redundante Kommunikationsverbindung zwischen zwei Netzknoten innerhalb des industriellen Kommunikationsnetzes voneinander unabhängige Pfade ermittelt werden, die separate Netzknoten eines einzelnen Kommunikationsnetzes umfassen. Die voneinander unabhängigen Pfade können sowohl durch eine zentrale Instanz innerhalb des industriellen Kommunikationsnetzes als auch dezentral durch die Netzknoten des industriellen Kommunikationsnetzes ermittelt werden. Für die ermittelten voneinander unabhängigen Pfade kann beispielsweise jeweils ein virtuelles lokales Netz eingerichtet werden. Dementsprechend werden die ermittelten voneinander unabhängigen Pfade anhand einer Kennung ihres zugeordneten virtuellen lokalen Netzes identifiziert.

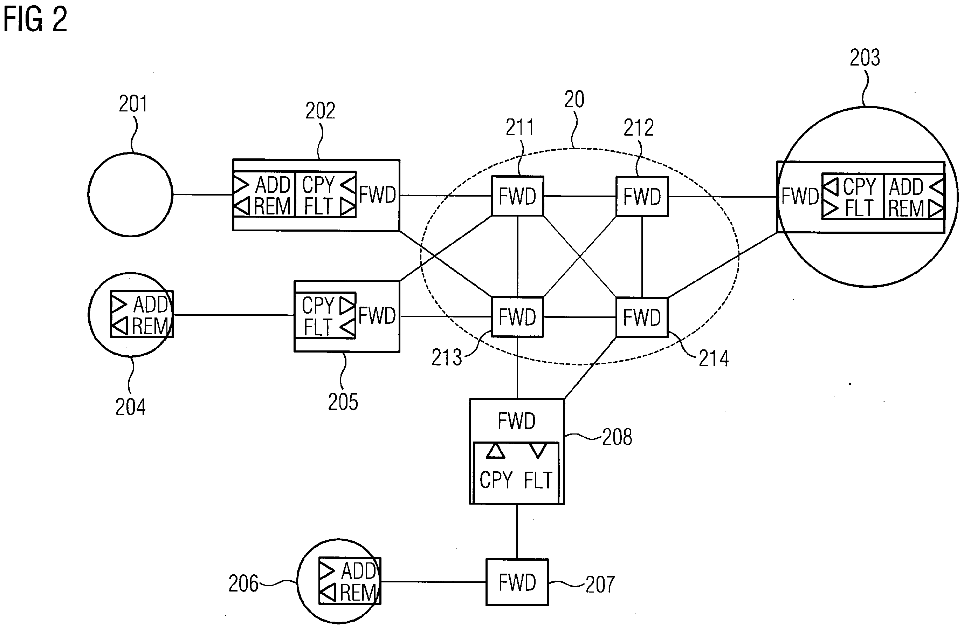

In Figur 2 ist beispielhaft ein einfaches vermaschtes Kommunikationsnetz mit mehreren Netzknoten 201-208, 211-214 dargestellt, das in einem Bereich 20 stark miteinander vermaschter Netzknoten 211-214 redundante Pfade aufweist. Die Netzknoten 201-208, 211-214 realisieren in unterschiedlichem Umfang folgende Basisfunktionen für eine stoßfreie Medienredundanz in beliebig vermaschten Kommunikationsnetzen:
- ADD (add) - Einfügen eines eindeutigen Duplikateidentifikators in redundant zu übermittelnde Nachrichten,
- CPY (copy) - Replikation bzw. Kopieren von Nachrichten mit Duplikateidentifikator an Verzweigungsstellen innerhalb Kommunikationsnetzes,
- FWD (forward) - Weiterleitung von Nachrichten mit Duplikateidentifikator,
- FLT (filter) - Elimination bzw. Verwerfen unnötiger Kopien von Nachrichten nach Detektion redundant empfangener Nachrichten,
- REM (remove) - Entfernen eines Duplikateidentifikators aus redundant übermittelten Nachrichten.

Die Netzknoten 211-214 realisieren lediglich die Basisfunktion FWD und tauschen Nachrichten mit Duplikateidentifikatoren entsprechend zu den ermittelten Pfaden korrespondierenden Weiterleitungsregeln zwischen ihren Anschlüssen aus. Die Basisfunktion FWD kann beispielsweise durch Switches ohne Redundanzfunktionen realisiert werden.

Die Netzknoten 201, 204 und 206 stellen einfach angebundene Endknoten dar. Dabei realisiert der Netzknoten 201 im vorliegenden Ausführungsbeispiel keinerlei Redundanzfunktionen, während die Netzknoten 204 und 206 immerhin die Basisfunktionen ADD und REM realisieren. Demzufolge realisiert der als Verzweigungsstelle für den Netzknoten 201 dienende Netzknoten 202 sämtliche o.g. Basisfunktionen. Die als Verzweigungsstellen für die Netzknoten 204 und 206 dienenden Netzknoten 205 und 208 müssen lediglich die Basisfunktionen CPY, FLT und FWD realisieren, da die beiden einfach angebundenen Netzknoten 204 und 206 bereits grundlegende Basisfunktionen realisieren. Im Unterschied zum Netzknoten 206, der indirekt über einen Netzknoten 207 mit Weiterleitungsfunktion (FWD) mit seiner zugeordneten Verzweigungsstelle verbunden ist, ist der netzknoten 204 direkt mit seiner zugeordneten Verzweigungsstelle verbunden.

Der Netzknoten 203 stellt einen doppelt an das in Figur 2 dargestellte Kommunikationsnetz angebundenen Endknoten dar. Aufgrund dessen realisiert er zur Durchführung des vorangehend beschriebenen Verfahrens zur redundanten Nachrichtenübermittlung sämtliche o.g. Basisfunktionen.

## Patentansprüche

1. Verfahren zur redundanten Nachrichtenübermittlung in einem industriellen Kommunikationsnetz, bei dem
- zumindest ein Kommunikationsgerät (1) zumindest eine erste und eine zweite Sende- und Empfangseinheit (101-104) umfaßt, die jeweils eine Schnittstelle für eine Netzverbindung des industriellen Kommunikationsnetzes (2) aufweisen und mit einem Koppelelement (12) des Kommunikationsgeräts verbunden sind,
- den Sende- und Empfangseinheiten eine Signalverarbeitungseinheit (11) des Kommunikationsgeräts zugeordnet ist, durch die redundant vom Kommunikationsgerät zu sendende Nachrichten dupliziert von den Sende- und Empfangseinheiten gesendet und von den Sende- und Empfangseinheiten am Kommunikationsgerät redundant empfangene Nachrichten detektiert werden,
- zueinander redundante Nachrichten durch einen gemeinsamen Duplikateidentifikator gekennzeichnet werden,
- das zumindest eine Kommunikationsgerät ein Switch oder eine Bridge ist,
**dadurch gekennzeichnet, daß**
- das industrielle Kommunikationsnetz eine beliebig vermaschte Netztopologie aufweist, wobei das Kommunikationsnetz jeweils mehrere über getrennte Switches oder Bridges und Koppelstrecken geführte Pfade zwischen zwei Netzknoten (202-203, 205, 208, 211-214) umfaßt,
- für eine zumindest abschnittsweise redundante Kommunikationsverbindung zwischen den zwei Netzknoten innerhalb des industriellen Kommunikationsnetzes voneinander unabhängige Pfade ermittelt werden, wobei die voneinander unabhängigen Pfade separate Netzknoten eines einzelnen Kommunikationsnetzes umfassen,
- Nachrichten mit Duplikateidentifikatoren entsprechend zu den ermittelten Pfaden korrespondierenden Weiterleitungsregeln zwischen den Sende- und Empfangseinheiten des Kommunikationsgeräts ausgetauscht werden.

2. Verfahren nach Anspruch 1,
bei dem über das Koppelelement ein einfach angebundener Netzknoten (31, 32) ohne jegliche Redundanzfunktionen mit den Sende- und Empfangseinheiten verbunden ist, und bei dem Duplikateidentifikatoren durch den einfach angebundenen Netzknoten in redundant zu sendende Nachrichten eingefügt werden, und bei dem Duplikateidentifikatoren durch den einfach angebundenen Netzknoten aus redundant empfangenen Nachrichten entfernt werden.

3. Verfahren nach Anspruch 1,
bei dem über das Koppelelement ein einfach angebundener Netzknoten (31, 32) ohne jegliche Redundanzfunktionen mit den Sende- und Empfangseinheiten verbunden ist, und bei dem Duplikateidentifikatoren durch die Signalverarbeitungseinheit in redundant zu sendende Nachrichten des einfach angebundenen Netzknotens eingefügt werden, und bei dem Duplikateidentifikatoren durch die durch die Signalverarbeitungseinheit aus redundant empfangenen Nachrichten für den einfach angebundenen Netzknoten entfernt werden.

4. Verfahren nach einem der Ansprüche 1 bis 3,
bei dem für die ermittelten voneinander unabhängigen Pfade jeweils ein virtuelles lokales Netz eingerichtet wird, und bei dem die ermittelten voneinander unabhängigen Pfade anhand einer Kennung ihres zugeordneten virtuellen lokalen Netzes identifiziert werden.

5. Verfahren nach einem der Ansprüche 1 bis 4,
bei dem die voneinander unabhängigen Pfade durch die Signalverarbeitungseinheit ermittelt werden.

6. Verfahren nach einem der Ansprüche 1 bis 5,
bei dem die voneinander unabhängigen Pfade durch eine zentrale Instanz innerhalb des industriellen Kommunikationsnetzes ermittelt werden.

7. Verfahren nach einem der Ansprüche 1 bis 6,
bei dem die voneinander unabhängigen Pfade dezentral durch die Netzknoten des industriellen Kommunikationsnetzes ermittelt werden.

8. Verfahren nach einem der Ansprüche 1 bis 7,
bei dem in einer der Signalverarbeitungseinheit zugeordneten Speichereinheit Duplikateidentifikatoren von bereits fehlerfrei empfangenen Nachrichten gespeichert werden, und bei dem die Signalverarbeitungseinheit bei Empfang einer neuen Nachricht deren Duplikateidentifikator auf Übereinstimmung mit einem bereits gespeicherten Duplikateidentifikator überprüft.

9. Kommunikationsgerät für ein redundant betreibbares industrielles Kommunikationsnetz mit
- zumindest einer ersten und einer zweiten Sende- und Empfangseinheit (101-104), die jeweils eine Schnittstelle für eine Netzverbindung des industriellen Kommunikationsnetzes (2) aufweisen,
- einem mit den Sende- und Empfangseinheiten verbundenen Koppelelement (12),
- einer den Sende- und Empfangseinheiten zugeordneten Signalverarbeitungseinheit (11), die eine Replikationseinheit (111) zum Duplizieren von durch die Sende- und Empfangseinheiten redundant zu sendenden Nachrichten und eine Filtereinheit (112) umfaßt, die für eine Detektion redundant empfangener Nachrichten eingerichtet ist, wobei zueinander redundante Nachrichten durch einen gemeinsamen Duplikateidentifikator gekennzeichnet sind,
- wobei das Kommunikationsgerät ein Switch oder eine Bridge ist,
**dadurch gekennzeichnet, daß**
- das Kommunikationsgerät für einen Betrieb in einem industriellen Kommunikationsnetz mit einer beliebig vermaschten Netztopologie ausgestaltet und eingerichtet ist, wobei für eine zumindest abschnittsweise redundante Kommunikationsverbindung zwischen zwei Netzknoten (202-203, 205, 208, 211-214) innerhalb des industriellen Kommunikationsnetzes voneinander unabhängige Pfade ermittelt sind, die separate Netzknoten eines einzelnen Kommunikationsnetzes umfassen, wobei das Kommunikationsnetz jeweils mehrere über getrennte Switches oder Bridges und Koppelstrecken geführte Pfade zwischen den zwei Netzknoten umfaßt,
- die Signalverarbeitungseinheit eine Weiterleitungseinheit (113) umfaßt, die dafür ausgestaltet und eingerichtet ist, daß Nachrichten mit Duplikateidentifikatoren entsprechend zu den ermittelten Pfaden korrespondierenden Weiterleitungsregeln zwischen den Sende- und Empfangseinheiten des Kommunikationsgeräts ausgetauscht werden.

10. Kommunikationsgerät nach Anspruch 9,
bei dem über das Koppelelement ein einfach angebundener Netzknoten (31, 32) ohne jegliche Redundanzfunktionen mit den Sende- und Empfangseinheiten verbunden ist, und bei dem die Signalverarbeitungseinheit eine Funktionseinheit umfaßt, die dafür ausgestaltet und eingerichtet ist, daß Duplikateidentifikatoren durch die Signalverarbeitungseinheit in redundant zu sendende Nachrichten des einfach angebundenen Netzknotens eingefügt werden, und bei dem die Signalverarbeitungseinheit eine Funktionseinheit umfaßt, die dafür ausgestaltet und eingerichtet ist, daß Duplikateidentifikatoren durch die durch die Signalverarbeitungseinheit aus redundant empfangenen Nachrichten für den einfach angebundenen Netzknoten entfernt werden.

11. Kommunikationsgerät nach einem der Ansprüche 9 oder 10, bei dem für die ermittelten voneinander unabhängigen Pfade jeweils ein virtuelles lokales Netz eingerichtet ist, und bei dem die ermittelten voneinander unabhängigen Pfade anhand einer Kennung ihres zugeordneten virtuellen lokalen Netzes identifizierbar sind, und bei dem das Koppelelement eine Steuerungseinheit umfaßt, die für einen Betrieb von virtuellen lokalen Netzen eingerichtet ist.

12. Kommunikationsgerät nach einem der Ansprüche 9 bis 11, bei dem die Signalverarbeitungseinheit dafür ausgestaltet und eingerichtet ist, die voneinander unabhängigen Pfade zu ermitteln.

13. Kommunikationsgerät nach einem der Ansprüche 9 bis 12, bei dem die Sende- und Empfangseinheiten direkt oder über die Signalverarbeitungseinheit mit dem Koppelelement verbunden sind

14. Kommunikationsgerät nach einem der Ansprüche 9 bis 13, bei dem die Signalverarbeitungseinheit direkt oder über das Koppelelement mit den Sende- und Empfangseinheiten verbunden ist.

15. Kommunikationsgerät nach einem der Ansprüche 9 bis 14, bei dem die Signalverarbeitungseinheit eine Speichereinheit (114) zur Speicherung von Duplikateidentifikatoren von bereits fehlerfrei empfangenen Nachrichten umfaßt, und bei dem die Filtereinheit dafür ausgestaltet und eingerichtet ist, bei Empfang einer neuen Nachricht deren Duplikateidentifikator auf Übereinstimmung mit einem bereits gespeicherten Duplikateidentifikator zu überprüfen.

## Claims

1. Method for redundant message transmission in an industrial communication network, in which
- at least one communication device (1) comprises at least a first and a second transmission and reception unit (101-104) that each have an interface for a network connection of the industrial communication network (2) and are connected to a coupling element (12) of the communication device,
- the transmission and reception units have an associated signal processing unit (11) of the communication device that sends messages that are to be sent in redundant form by the communication device in duplicated form from the transmission and reception units and detects messages received in redundant form from the transmission and reception units on the communication device,
- messages that are redundant with respect to one another are denoted by a common duplicate identifier,
- the at least one communication device is a switch or a bridge,
**characterized in that**
- the industrial communication network has an arbitrarily meshed network topology, wherein the communication network comprises multiple paths, routed via separate switches or bridges and coupling sections, between two network nodes (202-203, 205, 208, 211-214) in each case,
- mutually independent paths are ascertained for a communication link that is redundant at least in sections between the two network nodes within the industrial communication network, wherein the mutually independent paths comprise separate network nodes of a single communication network,
- messages with duplicate identifiers are interchanged between the transmission and reception units of the communication device in accordance with forwarding rules that correspond to the ascertained paths.

2. Method according to Claim 1,
in which the coupling element connects a singly connected network node (31, 32) without any redundancy functions to the transmission and reception units, and in which duplicate identifiers are inserted by the singly connected network node into messages that are to be sent in redundant form, and in which duplicate identifiers are removed by the singly connected network node from messages that are received in redundant form.

3. Method according to Claim 1,
in which the coupling element connects a singly connected network node (31, 32) without any redundancy functions to the transmission and reception units, and in which duplicate identifiers are inserted by the signal processing unit into messages from the singly connected network node that are to be sent in redundant form, and in which duplicate identifiers are removed by the signal processing unit from redundantly received messages for the singly connected network node.

4. Method according to one of Claims 1 to 3,
in which a respective virtual local area network is set up for the ascertained mutually independent paths, and in which the ascertained mutually independent paths are identified from an identity for their associated virtual local area network.

5. Method according to one of Claims 1 to 4,
in which the mutually independent paths are ascertained by the signal processing unit.

6. Method according to one of Claims 1 to 5,
in which the mutually independent paths are ascertained by a central entity within the industrial communication network.

7. Method according to one of Claims 1 to 6,
in which the mutually independent paths are ascertained locally by the network nodes of the industrial communication network.

8. Method according to one of Claims 1 to 7,
in which a memory unit associated with the signal processing unit is used to store duplicate identifiers from messages already received without error, and in which the signal processing unit, upon receiving a new message, checks the duplicate identifier thereof for a match with an already stored duplicate identifier.

9. Communication device for a redundantly operable industrial communication network having
- at least a first and a second transmission and reception unit (101-104) that each have an interface for a network connection of the industrial communication network (2),
- a coupling element (12) connected to the transmission and reception units,
- a signal processing unit (11) that is associated with the transmission and reception units and that comprises a replication unit (111) for duplicating messages that are to be sent in redundant form by the transmission and reception units and a filter unit (112) that is set up for detecting redundantly received messages, wherein messages that are redundant with respect to one another are denoted by a common duplicate identifier,
- wherein the communication device is a switch or a bridge,
**characterized in that**
- the communication device is designed and set up for operation in an industrial communication network having an arbitrarily meshed network topology, wherein mutually independent paths are ascertained for a communication link that is redundant at least in sections between two network nodes (202-203, 205, 208, 211-214) within the industrial communication network, said mutually independent paths comprising separate network nodes of a single communication network, wherein the communication network comprises multiple paths, routed via separate switches or bridges and coupling sections, between the two network nodes in each case,
- the signal processing unit comprises a forwarding unit (113) that is designed and set up to ensure that messages with duplicate identifiers are interchanged between the transmission and reception units of the communication device in accordance with forwarding rules that correspond to the ascertained paths.

10. Communication device according to Claim 9,
in which the coupling element connects a singly connected network node (31, 32) without any redundancy functions to the transmission and reception units, and in which the signal processing unit comprises a functional unit that is designed and set up to ensure that duplicate identifiers are inserted by the signal processing unit into messages from the singly connected network node that are to be sent in redundant form, and in which the signal processing unit comprises a functional unit that is designed and set up to ensure that duplicate identifiers are removed by the signal processing unit from redundantly received messages for the singly connected network node.

11. Communication device according to either of Claims 9 and 10, in which a respective virtual local area network is set up for the ascertained mutually independent paths, and in which the ascertained mutually independent paths can be identified from an identity for their associated virtual local area network, and in which the coupling element comprises a control unit that is set up for operation of virtual local area networks.

12. Communication device according to one of Claims 9 to 11, in which the signal processing unit is designed and set up to ascertain the mutually independent paths.

13. Communication device according to one of Claims 9 to 12, in which the transmission and reception units are connected to the coupling element directly or via the signal processing unit.

14. Communication device according to one of Claims 9 to 13, in which the signal processing unit is connected to the transmission and reception units directly or via the coupling element.

15. Communication device according to one of Claims 9 to 14, in which the signal processing unit comprises a memory unit (114) for storing duplicate identifiers from messages already received without error, and in which the filter unit is designed and set up so that, upon receiving a new message, it checks the duplicate identifier thereof for a match with an already stored duplicate identifier.

## Revendications

1. Procédé de transmission redondante de messages dans un réseau de communication industriel, dans lequel
- au moins un appareil (1) de communication comprend au moins une première et une deuxième unités (101 à 104) d'émission et de réception, qui ont chacune une interface pour une liaison au réseau du réseau (2) de communication industriel et sont reliés à un élément (12) de couplage de l'appareil de communication,
- aux unités d'émission et de réception est associée une unité (11) de traitement du signal de l'appareil de communication, par laquelle les messages à envoyer de manière redondante par l'appareil de communication sont envoyés dupliqués par les unités d'émission et de réception et des messages reçus de manière redondante par les unités d'émission et de réception sont détectés,
- on caractérise des messages redondants entre eux par un identifiant commun de duplication,
- le au moins un appareil de communication est un switch ou un bridge,
**caractérisé en ce que**
- le réseau de communication industriel a une topologie de réseau maillé à volonté, le réseau de communication comprenant respectivement plusieurs trajets, passant par des switches ou des bridges et des sections de couplage séparées, entre deux nœuds (202-203, 205, 208, 211-214) du réseau,
- pour une liaison de communication, redondante au moins par partie, entre les deux nœuds de communication, on détermine dans le réseau de communication industriel des trajets indépendants l'un de l'autre, les trajets indépendants l'un de l'autre comprenant des nœuds de réseau séparés d'un réseau de communication individuel,
- on échange des messages, entre les unités d'émission et de réception de l'appareil de communication, avec des règles d'acheminement correspondant aux trajets déterminés conformément aux identifiants de duplication.

2. Procédé suivant la revendication 1,
dans lequel par l'élément de couplage, un nœud (31, 32) de réseau rattaché simplement, sans quelle que fonction de redondance que ce soit, est relié aux unités d'émission et de réception et dans lequel on insère dans des messages à envoyer de manière redondante des identifiants de duplication par le nœud de réseau rattaché simplement et dans lequel on retire des messages reçus de manière redondante des identifiants de duplication par le nœud de réseau rattaché simplement.

3. Procédé suivant la revendication 1,
dans lequel par l'élément de couplage, un nœud (31, 32) rattaché simplement, sans quelle que fonction de redondance que ce soit, est relié aux unités d'émission et de réception et dans lequel on insère dans des messages envoyer de manière redondante du nœud de réseau rattaché simplement des identifiants de duplication par l'unité de traitement du signal et dans lequel on retire des messages reçus de manière redondante, pour le nœud de réseau rattaché simplement, des identifiants de duplication par l'unité de traitement de signal.

4. Procédé suivant l'une des revendications 1 à 3,
dans lequel on établit pour les trajets indépendants l'un de l'autre, qui sont déterminés respectivement, un réseau local virtuel et dans lequel on identifie les trajets déterminés indépendants l'un de l'autre à l'aide d'une caractérisation de leur réseau local virtuel associé.

5. Procédé suivant l'une des revendications 1 à 4,
dans lequel on détermine les trajets indépendants l'un de l'autre par l'unité de traitement du signal.

6. Procédé suivant l'une des revendications 1 à 5,
dans lequel on détermine les trajets indépendants l'un de l'autre par une instance centrale dans le réseau de communication industriel.

7. Procédé suivant l'une des revendications 1 à 6, dans lequel on détermine les trajets indépendants l'un de l'autre de manière décentralisée par le nœud du réseau de communication industriel.

8. Procédé suivant l'une des revendications 1 à 7, dans lequel dans une unité de mémoire associée à une unité de traitement du signal, on met en mémoire des identifiants de duplication d'un message reçu déjà sans erreur et dans lequel l'unité de traitement du signal contrôle, à la réception d'un nouveau message, son identifiant de duplication pour savoir s'il coïncide avec un identifiant de duplication déjà mis en mémoire.

9. Appareil de communication pour un réseau de communication industriel pouvant fonctionner de manière redondante, comprenant
- au moins une première et une deuxième unités d'émission et de réception, qui ont chacune une interface pour une liaison au réseau de communication industriel.
- un élément (12) de couplage relié aux unités d'émission et de réception,
- une unité (11) de traitement du signal, qui est associée aux unités d'émission et de réception et qui comprend une unité (111) de réplication pour dupliquer des messages à envoyer de manière redondante par les unités d'émission et de réception et une unité (112) de filtrage, qui est conçue pour détecter des messages reçus de manière redondante, dans lequel des messages redondants l'un par rapport à l'autre sont **caractérisés par** un identifiant de duplication commun,
- dans lequel l'appareil de communication est un switch ou un bridge,
**caractérisé en ce que**
- l'appareil de communication est conformé et conçu pour un fonctionnement dans un réseau de communication industriel en ayant une topologie de réseau maillée à volonté, dans lequel pour une liaison de communication redondante au moins par endroit entre deux nœuds (202-203, 205, 208, 211-214) de réseau dans le réseau de communication industriel sont déterminés des trajets indépendants l'un de l'autre, qui comprennent des nœuds de réseaux séparés d'un réseau de communication individuel, dans lequel le réseau de communication comprend entre les deux nœuds de réseau respectivement plusieurs trajets passant par des switchs ou des bridges ou des sections de couplage séparées,
- l'unité de traitement du signal comprend une unité (113) d'acheminement, qui est conformée et conçue pour échanger entre les unités d'émission et de réception de l'appareil de communication, des messages conformément à des règles d'acheminement correspondant aux trajets déterminés conformément à des identifiants de duplication.

10. Appareil de communication suivant la revendication 9,
dans lequel dans l'élément de couplage un nœud (31, 32) de réseau rattaché simplement est relié, sans quelle que fonction de redondance que ce soit, aux unités d'émission et de réception et dans lequel l'unité de traitement du signal comprend une unité fonctionnelle, qui est conformée et conçue pour insérer, dans des messages envoyés de manière redondante des nœuds de réseau rattachés simplement, des identifiants de duplication par l'unité de traitement du signal et dans lequel l'unité de traitement du signal comprend une unité fonctionnelle qui est conformée et conçue pour retirer des messages reçus de manière redondante, pour le nœud de réseau rattaché simplement, des identifiants de duplication par l'unité de traitement de signal.

11. Appareil de communication suivant l'une des revendications 9 ou 10, dans lequel pour les trajets indépendants l'un de l'autre qui sont déterminés, est conçu respectivement un réseau local virtuel et dans lequel les trajets déterminés indépendants l'un de l'autre peuvent être identifiés à l'aide d'une caractérisation de leur réseau local virtuel associé et dans lequel l'élément de couplage comprend une unité de commande, qui est conçue pour le fonctionnement de réseau local virtuel.

12. Appareil de communication suivant l'une des revendications 9 à 11, dans lequel l'unité de traitement du signal est conformée et conçue pour déterminer les trajets indépendants l'un de l'autre.

13. Appareil de communication suivant l'une des revendications 9 à 12, dans lequel les unités d'émission et de réception sont reliées à l'élément de couplage directement ou par l'unité de traitement du signal.

14. Appareil de communication suivant l'une des revendications 9 à 13, dans lequel l'unité de traitement du signal est reliée aux unités d'émission et de réception directement ou par l'élément de couplage.

15. Appareil de communication suivant l'une des revendications 9 à 14, dans lequel l'unité de traitement du signal comprend une unité (114) de mémoire pour la mise en mémoire d'identifiants de duplication de messages reçus déjà sans erreur et dans lequel l'unité de filtrage est conformée et conçue pour contrôler à la réception d'un message nouveau son identifiant de duplication, pour savoir s'il coïncide avec un identifiant de duplication déjà mis en mémoire.
